# EUROPEAN PATENT APPLICATION

(11) **EP 4 835 639 A1**
(43) Date of publication of application: **04.11.2026**
(21) Application number: 24912217.7
(22) Date of filing: 03.12.2024
(51) Int. Cl.: G06F 3/12, G06F 40/186

(54) **PRINT DATA GENERATION DEVICE, PRINT DATA GENERATION METHOD, DATA GENERATION DEVICE FOR GENERATING PRINT DATA, AND DATA GENERATION METHOD FOR GENERATING PRINT DATA**

(30) Priority: 26.12.2023 JP 2023218981
(71) Applicant: Star Micronics Co., Ltd., Shizuoka-shi, Shizuoka 422-8654 (JP)
(72) Inventor: ONO Teppei, Shizuoka-shi, Shizuoka 422-8654 (JP); IGARASHI Keisuke, Shizuoka-shi, Shizuoka 422-8654 (JP); HARA Yusuke, Shizuoka-shi, Shizuoka 422-8654 (JP); MATSUSHITA Yuichi, Shizuoka-shi, Shizuoka 422-8654 (JP)
(74) Representative: Grünecker Patent- und Rechtsanwälte PartG mbB
(86) International application number: PCT/JP2024/042607
(87) International publication number: WO 2025/142327

(57) **Abstract**

[Problem]

To make it possible to execute merge printing by generating print data having a variable number of print elements without incorporating descriptions required to repeatedly generate commands into the program code of an application that generates print data.

[Solution]

Print data are generated using a template constituted by commands of the smallest unit not including repetitions, the number of which corresponds to a variable number of print elements, and field data including data of print elements to be inserted into merge fields of generation commands included in the template. A repeat range RR is specified from the template, the merge fields are substituted with data of the print elements, including repeat substitutions within the specified range, and print data including print-related commands into which the data of the print elements have been inserted is generated using a plurality of generation commands including substituted generation commands.

## Description

### [Technical Field]

The present invention relates to a print data generation device, a print data generation method, a print API generation device, and a print API generation method. More specifically, the present invention is suitable for use in a device and a method for generating print data used for merge printing, and a device and a method for generating a print data generation API.

### [Background Art]

In a known conventional system that executes printing by transmitting print data of a receipt to a printer from a POS terminal, print data including commands for character styling, paper cutting, and the like are transmitted together with print instructions (see PTL 1). Fig. 4 of PTL 1 illustrates print data including a plurality of text string print-related command groups constituted by combinations of text string print instruction commands, which include dedicated command code and text string information, and text string styling commands. The printer converts the text code included in the text string print instruction command of each text string print-related command group into corresponding font data, and then executes printing after applying the styling instructed by the text string styling command.

When generating print data including a plurality of commands corresponding to print elements in which the number of elements is variable (e.g., an item part of a receipt) as illustrated in Fig. 4 of PTL 1, the print data is generated by obtaining the number of elements from field data in which information of a text string to be printed is recorded by the application that generates the print data, and repeatedly generating commands a number of times equivalent to the number of elements.

However, when the print data generation API is repeatedly executed a plurality of times, description of loops, conditional branches, and so on must be incorporated into the program code of the application that calls the print data generation API, leading to a problem in that the code becomes unintuitive and difficult to understand.

### [Citation List]

### [Patent Literature]

[PTL 1] Japanese Patent No. 7006096

### [Summary of Invention]

### [Technical Problem]

The present invention has been designed to solve this problem, and an object thereof is to make it possible to execute merge printing by generating print data having a variable number of print elements without incorporating descriptions required to repeatedly generate commands into the program code of an application that generates print data.

### [Solution to Problem]

To solve the problem described above, in the present invention, print data including a plurality of print-related commands are generated using a template and field data including data of print elements to be inserted into merge fields of the template. The template includes one or more generation commands for generating the print-related commands, and the one or more generation commands are constituted by commands of the smallest unit not including repetitions, the number of which corresponds to the number of print elements, which is variable. Print data including print-related commands into which the data of the print elements have been inserted are generated using a plurality of the generation commands including substituted generation commands by specifying a range of generation commands for repeatedly executing processing a number of times corresponding to the variable number of print elements from the template on the basis of the content of both the template and the field data or the content of the template, and substituting merge fields included in the generation commands with the data of the print elements, including repeat substitutions within the specified range.

### [Advantageous Effects of Invention]

According to the present invention configured as described above, on the basis of a template in which one or more generation commands are constituted by commands of the smallest unit not including repetitions, print data written so that the generation commands are repeatedly executed a number of times corresponding to the variable number of print elements, including generation commands in which the merge fields are replaced with the data of the print elements, are generated. This makes it possible to execute merge printing by generating print data having a variable number of print elements without incorporating descriptions required to repeatedly generate commands into the program code of an application that generates print data.

### [Brief Description of Drawings]

[Fig. 1] Fig. 1 is a schematic diagram illustrating an overall example configuration of a printing system according to an embodiment.
[Fig. 2] Fig. 2 is a diagram illustrating an example hardware configuration of the printing system according to the embodiment.
[Fig. 3] Fig. 3 is a block diagram illustrating an example functional configuration of a host device according to the embodiment.
[Fig. 4] Fig. 4 is a diagram illustrating types of print elements included in field data and types of API call commands included in a template.
[Fig. 5] Fig. 5 is a diagram illustrating an example of template substitution.
[Fig. 6] Fig. 6 is a diagram illustrating processing content of a print API generation unit according to a first embodiment.
[Fig. 7] Fig. 7 is a diagram illustrating a print result based on print data generated from the print data generation API illustrated in Fig. 6(b).
[Fig. 8] Fig. 8 is a diagram illustrating processing content of a print API generation unit according to a second embodiment.
[Fig. 9] Fig. 9 is a diagram illustrating a print result based on print data generated from the print data generation API illustrated in Fig. 8(b).
[Fig. 10A] Fig. 10A is a flowchart illustrating an example operation of the print API generation unit according to the second embodiment.
[Fig. 10B] Fig. 10B is a flowchart illustrating an example operation of the print API generation unit according to the second embodiment.
[Fig. 11] Fig. 11 is a diagram illustrating an example of a substitute template during a generation process according to the second embodiment.
[Fig. 12] Fig. 12 is a diagram illustrating processing content of a print API generation unit according to a third embodiment.
[Fig. 13] Fig. 13 is a diagram illustrating a print result based on print data generated from the print data generation API illustrated in Fig. 12(b).
[Fig. 14A] Fig. 14A is a flowchart illustrating an example operation of the print API generation unit according to the third embodiment.
[Fig. 14B] Fig. 14B is a flowchart illustrating an example operation of the print API generation unit according to the third embodiment.
[Fig. 15] Fig. 15 is a diagram illustrating an example of a substitute template during a generation process according to the third embodiment.
[Fig. 16A] Fig. 16A is a diagram illustrating an example of the template and the substitute template in Fig. 8 expressed in API call format.
[Fig. 16B] Fig. 16B is a diagram illustrating an example of the template and the substitute template in Fig. 8 expressed in markup language format.
[Fig. 16C] Fig. 16C is a diagram illustrating an example of the template and the substitute template in Fig. 8 expressed in printer command format.
[Fig. 17] Fig. 17 is a diagram illustrating an example of the template in Fig. 6(a) expressed in API call format, markup language format, and printer command format.
[Fig. 18] Fig. 18 is a diagram illustrating another format example of the substitute template.
[Fig. 19A] Fig. 19A is a diagram illustrating another example configuration of the printing system according to an embodiment.
[Fig. 19B] Fig. 19B is a diagram illustrating another example configuration of the printing system according to an embodiment.
[Fig. 19C] Fig. 19C is a diagram illustrating another example configuration of the printing system according to an embodiment.
[Fig. 19D] Fig. 19D is a diagram illustrating another example configuration of the printing system according to an embodiment.
[Fig. 19E] Fig. 19E is a diagram illustrating another example configuration of the printing system according to an embodiment.
[Fig. 19F] Fig. 19F is a diagram illustrating another example configuration of the printing system according to an embodiment.
[Fig. 19G] Fig. 19G is a diagram illustrating another example configuration of the printing system according to an embodiment.
[Fig. 19H] Fig. 19H is a diagram illustrating another example configuration of the printing system according to an embodiment.
[Fig. 20] Fig. 20 is a diagram illustrating an example of template substitution including format specification.

### [Description of Embodiments]

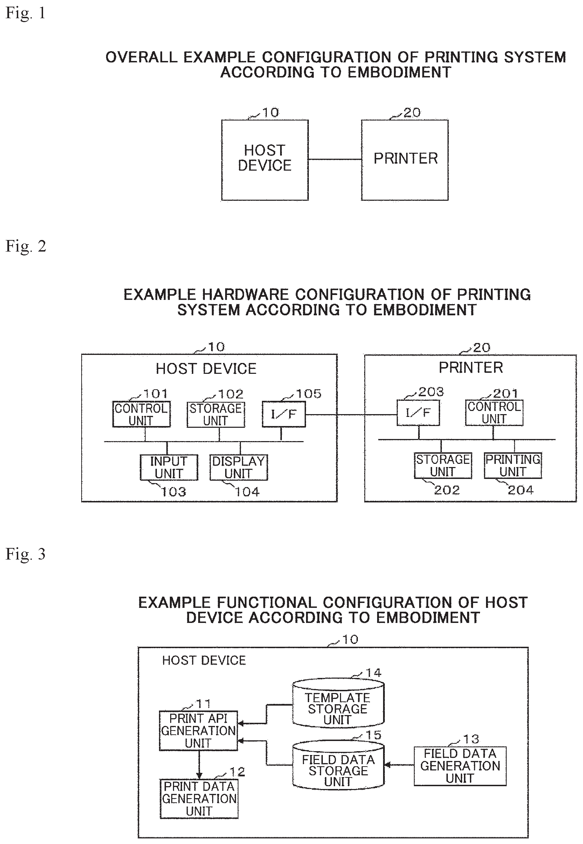

An embodiment of the present invention will be described hereinafter on the basis of the drawings. Fig. 1 is a schematic diagram illustrating an overall example configuration of a printing system according to this embodiment. As illustrated in Fig. 1, the printing system according to this embodiment is configured to include a host device 10 and a printer 20. In the configuration illustrated in Fig. 1, the host device 10 includes a print data generation device and a data generation device for print data generation according to this embodiment. In this embodiment, a print data generation API, which includes a plurality of API call commands, is used as an example of data for print data generation. The API call command is an example of a "generation command" denoted in the claims.

The host device 10 and the printer 20 are connected by a wired interface cable such as a serial cable, Ethernet (registered trademark), or USB (Universal Serial Bus), for example. Alternatively, the host device 10 and the printer 20 may be connected through a wireless communication network such as Bluetooth (registered trademark), Wi-Fi (registered trademark), or a wireless LAN. Alternatively, the host device 10 and the printer 20 may be connected through a communication network such as the Internet.

Fig. 2 is a diagram illustrating an example hardware configuration of the printing system according to this embodiment. As illustrated in Fig. 2, the host device 10 includes, as a hardware configuration, a control unit 101, a storage unit 102, an input unit 103, a display unit 104, and an I/F 105. Further, the printer 20 includes, as a hardware configuration, a control unit 201, a storage unit 202, an I/F 203, and a printing unit 204.

The control unit 101 of the host device 10 is constituted by a microcomputer including a CPU, a RAM, a ROM, and the like, for example, and operates in accordance with an operating system and other programs stored in the storage unit 102 so as to execute information processing using various data stored in the storage unit 102. The control unit 101 may include a DSP (Digital Signal Processor) and the like in addition to the microcomputer.

The storage unit 102 is constituted by a computer-readable storage medium. For example, the storage unit 102 is configured to include a ROM, a RAM, a hard disk, a semiconductor memory, or the like. The storage unit 102 stores various programs executed by the control unit 101. The various programs include an application program for generating field data to be inserted into merge fields when executing merge printing, a print data generation program for generating print data using the field data, and the like. The field data are data including data of one or more print elements, and the number of print elements included in the field data (the number of print elements, or in other words the number of elements of the merge printing) is variable.

The storage unit 102 also stores various data including data used in the processing of the control unit 101 and data generated in the course of the processing. The various data include a template and field data used when generating the print data, a print data generation API (also referred to as a substitute template) generated by inserting the field data into merge fields included in the template, print data having a command structure generated by executing the print data generation API, and the like. The template and the field data will be described in detail below.

The input unit 103 is constituted by a keyboard, a mouse, a touch panel, or the like, for example, and inputs data corresponding to operation input by a user into the control unit 101. The display unit 104 is constituted by a liquid crystal display or the like, for example, and displays information in response to instructions input from the control unit 101. The I/F 105 is constituted by a communication module that exchanges data with the printer 20, and outputs various data to the printer 20 in response to instructions input from the control unit 101.

In this embodiment, data to be printed, which are generated by the application program in the storage unit 102 on the basis of the control of the control unit 101, are converted into print data having a command structure that can be understood by the printer 20, whereupon the converted print data are output to the printer 20 from the I/F 105. When executing merge printing, the control unit 101 uses the template and the field data to generate print data including a plurality of print-related commands. For example, print data of a receipt, which includes names, prices, and the like of purchased items as print elements having a variable number of elements, are generated by the host device 10, whereupon the receipt is printed by the printer 20 on the basis of the generated print data.

The control unit 201 of the printer 20 is constituted by a microcomputer including a CPU, a RAM, a ROM, and the like, for example, and performs overall control of the printer 20 in accordance with a program stored in the storage unit 202. The control unit 201 may include a DSP and the like in addition to the microcomputer.The storage unit 202 is configured to include a ROM, a RAM, a semiconductor memory, or the like, and stores various programs and data required for executing printing.

The I/F 203 is constituted by a communication module that exchanges data with the host device 10, and receives print data transmitted from the host device 10 and outputs the received print data to the control unit 201. The printing unit 204 executes printing under the control of the control unit 201 in accordance with print-related commands indicated by the print data transmitted from the host device 10, and thereby forms an image based on the print data on a recording medium such as a printing sheet.

Fig. 3 is a block diagram illustrating an example functional configuration of the host device 10. As illustrated in Fig. 3, the host device 10 according to this embodiment includes a print API generation unit 11, a print data generation unit 12, a field data generation unit 13, a template storage unit 14, and a field data storage unit 15. Processing of the print API generation unit 11, the print data generation unit 12, and the field data generation unit 13 is executed by the control unit 101 of Fig. 2 using a program stored in the storage unit 102. The template storage unit 14 and the field data storage unit 15 are constituted by the storage unit 102 of Fig. 2.

The field data generation unit 13 generates field data including data of print elements to be inserted into merge fields of a template stored in the template storage unit 14 in response to an operation of the application program stored in the storage unit 102. The field data generated by the field data generation unit 13 are stored in the field data storage unit 15.

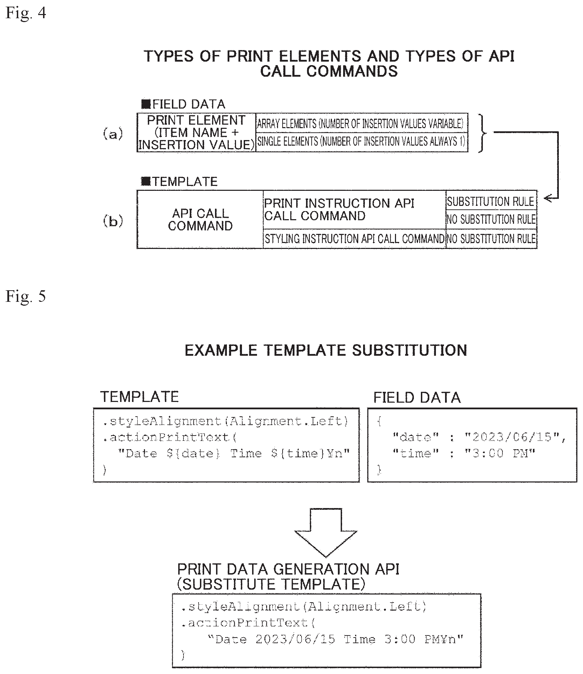

Each print element is constituted by a combination of an item name and an insertion value (a text string, a numeric string, a combination thereof, or the like) to be inserted into the merge field. As illustrated in Fig. 4(a), the print elements include print elements (referred to hereinafter as array elements) in which one or more insertion values are arranged and printed on the printing sheet, and print elements (referred to hereinafter as single elements) in which only one insertion value is arranged and printed on the printing sheet. The number of elements (the number of insertion values) in each of the array elements is variable. The number of elements in the single element, however, is always fixed at a single element. When printing a receipt, for example, the names, prices, and the like of the purchased items are examples of array elements, and the store name, the purchase time and date, and the like are examples of single elements.

The template storage unit 14 stores a template that is used to generate print data using field data. The template includes a plurality of API call commands for generating print-related commands. The print-related commands include commands instructing printing (referred to hereinafter as print instruction commands) and commands instructing styling (referred to hereinafter as styling instruction commands).

The API call commands are commands instructing call-up of an API library configured to generate print-related commands. As illustrated in Fig. 4(b), the API call commands include commands (referred to hereinafter as print instruction API call commands) for calling a print instruction command generation library, and commands (referred to hereinafter as styling instruction API call commands) for calling a styling instruction command generation library.

The print instruction API call commands include commands including a substitution rule for inserting a print element into a merge field, and commands not including the substitution rule. The print instruction API call commands that include the substitution rule include cases in which array element data are inserted into a merge field in accordance with the substitution rule and cases in which single element data are inserted into a merge field in accordance with the substitution rule. The styling instruction API call commands, meanwhile, do not include the substitution rule.

Fig. 5 is a diagram illustrating an example of template substitution. As illustrated in Fig. 5, in the substitution rule employed in this embodiment, a part that starts with a symbol ${ and ends with a symbol } is set as the merge field, and the text string in the merge field is replaced with the insertion value of a print element acquired from the field data using the internal text string surrounded by ${} as a key. Fig. 5 illustrates an example in which the merge fields of the print instruction API call commands are replaced with data of single elements.

The plurality of API call commands included in the template are constituted by a group of commands of the smallest unit not including repetitions, the number of which corresponds to the variable number of print elements. A group of commands of the smallest unit not including repetitions means that for the print instruction API call commands including the substitution rule, the command group does not include a number of API call commands corresponding to the number of elements in the array elements, even in the case of array elements for which a plurality of insertion values are repeatedly inserted.

The print API generation unit 11 corresponds to a print data generation data generation unit in the claims, and generates a print data generation API (a substitute template) including a plurality of API call commands by specifying, on the basis of the content of both the template and the field data or the content of the template, a range (occasionally abbreviated to "repeat range" in the following description) of API call commands for repeatedly executing processing a number of times corresponding to the variable number of print elements from among the plurality of API call commands included in the template, and replacing the merge fields included in the API call commands, including repeat substitutions in the specified range, with the data of the print elements. The plurality of API call commands include print instruction API call commands in which the merge fields are replaced with the data of the print elements (corresponding to a substituted generation command denoted in the claims), print instruction API call commands not including the merge fields, and styling instruction API call commands.

The print data generation unit 12 then generates print data including print-related commands into which the data of the print elements have been inserted by executing the print data generation API generated by the print API generation unit 11. More specifically, the print data generation unit 12 calls an API library configured to generate print-related commands in accordance with the plurality of API call commands included in the print data generation API, and generates print data including a plurality of print-related commands by executing processing prescribed by the API library. The generated print data are then output to the printer 20.

Three embodiments relating to the processing of the print API generation unit 11 will be described below. In a first embodiment, the repeat range of the API call commands is specified on the basis of the content of the template. In second and third embodiments, the repeat range of the API call commands is specified on the basis of the content of both the template and the field data.

### (First Embodiment)

In the first embodiment, the template has a hierarchical structure of a plurality of API call commands and also includes a repeat start flag on one of the layers of the hierarchy. The print API generation unit 11 specifies the repeat range on the basis of the repeat start flag and the hierarchical structure. The hierarchical structure is a typical structure used to specify a range in which to apply text styling in a print data generation API. More specifically, in the print data generation API, text styling specified by a styling instruction API call command on a certain layer of the hierarchy is applied to the relevant layer and layers therebelow, but is not applied to layers thereabove. In the first embodiment, this mechanism is used to specify the repeat range.

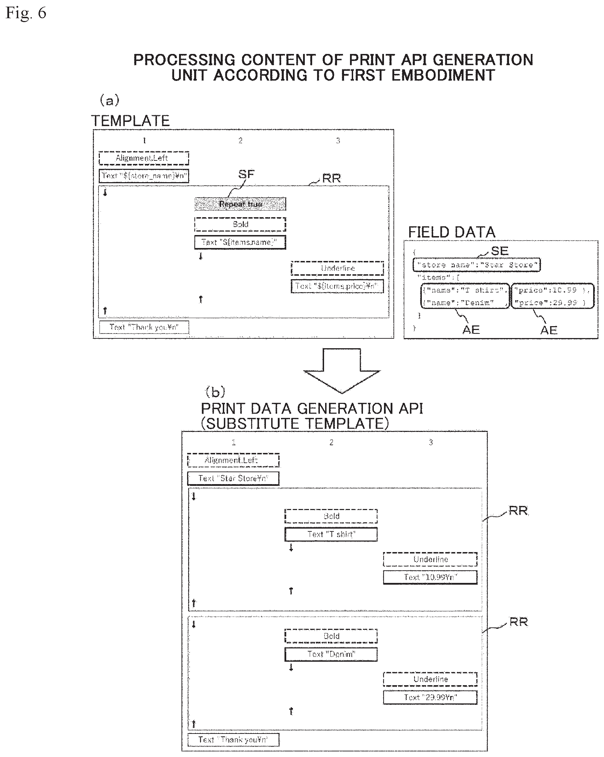

Fig. 6 is a diagram illustrating the processing content of the print API generation unit 11 according to the first embodiment. In Fig. 6, styling instruction API call commands are indicated by dotted-line frames, and print instruction API call commands are indicated by solid-line frames. Among the print instruction API call commands, commands including the substitution rule are indicated by thick solid-line frames, and commands not including the substitution rule are indicated by thin solid-line frames. The execution sequence of the API call commands is indicated from top to bottom in the figure, and the depth of the hierarchy is indicated from left to right in the figure. Note that "\n" included in the API call command indicates a line break instruction. The points described here apply similarly to the figures cited below.

Fig. 6(a) illustrates an example of a template with a hierarchical structure and field data, wherein a repeat range RR specified by the print data API generation unit 11 is indicated on the template by a rectangular frame. The template includes hierarchy control functions, and in the figure, the symbol "↓" indicates downward movement through the layers of the hierarchy, and the symbol "↑" indicates upward movement through the layers of the hierarchy. The repeat range RR also includes hierarchy control functions. Fig. 6(b) illustrates an example of a print data generation API (a substitute template) generated by replacing the merge fields included in the API call commands, including repeat substitutions within the specified range, with the data of the print elements included in the field data. In this embodiment, an example in which the field data are formed using the JSON format is described, but the present invention is not limited thereto. The field data can be formed using any desired data format, such as XML, CSV, Flat file, and the like, for example.

In the example of Fig. 6, the template is constituted by a three-layer hierarchy. From the start of the first layer, one styling instruction API call command and one print instruction API call command are described, and at the start of the next layer, i.e., the second layer, a repeat start flag SF is described, after which one styling instruction API call command and one print instruction API call command are described. Further, after entering the third layer, one styling instruction API call command and one print instruction API call command are described, after which the hierarchy returns to the first layer, where one print instruction API call command is described.

As illustrated in Fig. 6(a), the print API generation unit 11 specifies the API call commands included in the second layer, which includes the repeat start flag SF, and the third layer therebelow as the range (the repeat range RR) of API call commands for executing repeated substitutions. In other words, the styling instruction API call command and print instruction API call command included in the second layer and the styling instruction API call command and print instruction API call command included in the third layer are specified as the repeat range RR. The repeat range RR also includes hierarchy control functions associated with the specified API call commands, as described above. The hierarchy control functions associated with the specified API call commands are hierarchy control functions (in the example of Fig. 6(a), four hierarchy control functions indicated by the symbols "↓" and "↑" on the first and second layers) for controlling transitions to the layers (in the example of Fig. 6(a), the second and third layers) including the specified API call commands or transitions from these layers.

The print API generation unit 11 generates the print data generation API (the substitute template) by replacing the merge fields of the plurality of print instruction API call commands included in the template with the data (the insertion values) of the print elements included in the field data. At this time, as illustrated in Fig. 6(b), the print API generation unit 11 copies the API call commands and the associated hierarchy control functions included in the specified repeat range RR until the number of copies is identical to the number of array elements included in the field data, and then repeatedly executes processing for replacing the merge fields of the print instruction API call commands with the array element data a number of times corresponding to the number of array elements. The number of array elements can be ascertained by referring to the field data using the internal text string surrounded by ${} as a key.

As illustrated in Fig. 6(a), the field data include one single element SE and two array elements AE. In the example of Fig. 6(a), the one single element SE is the store name, and the two array elements AE are the product name and the price. The two array elements AE both have two elements (two insertion values). When the field data are configured in this manner, the print API generation unit 11 copies one set of the plurality of API call commands included in the repeat range RR and then executes substitution processing twice in order to insert the insertion values into the merge fields for the print instruction API call commands. Fig. 6(b) illustrates the print data generation API generated as a result of this processing.

More specifically, the merge field "${store_name}" of the print instruction API call command of the first layer illustrated in Fig. 6(a) is replaced with the data "Star Store" of the single element SE included in the field data. The data "Star Store" of the single element SE used in this substitution are acquired from the field data using the internal text string surrounded by ${} as a key (likewise for the following API call commands). Further, the merge field "${items.name}" of the print instruction API call command of the second layer included in the repeat range RR is replaced twice with the data "T shirt" and "Denim" of the array element AE included in the field data, and the merge field "${items.price}" of the print instruction API call command of the third layer is replaced twice with the data "10.99" and "29.99" of the array element AE included in the field data.

The API call commands including the array element substitution rule and the styling instruction API call commands associated therewith must be executed repeatedly in accordance with the number of array elements, but in this embodiment, the print data generation API is generated by copying the API call commands in the required number. Therefore, in the call source application (the print data generation program), the plurality of API call commands included in the generated print data generation API illustrated in Fig. 6(b) need only be executed once each in order from the start. As a result, there is no need to incorporate description required for repeatedly calling the API call commands in the program code of the call source application. This applies similarly to the second and third embodiments to be described below.

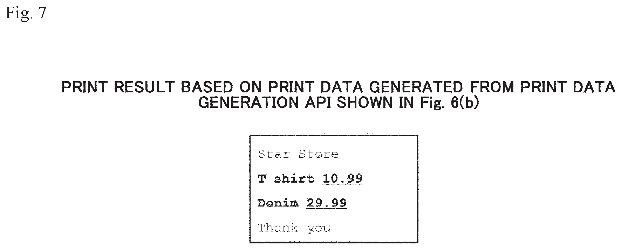

Fig. 7 is a diagram illustrating a print result obtained in a case where print data generated by the print data generation unit 12 on the basis of the print data generation API illustrated in Fig. 6(b) are output to the printer 20. As described above, as a result of executing the substitution processing twice on the print instruction API call commands of the second and third layers within the repeat range RR, "T shirt" and "Denim" are printed as the product names "name" on the second layer, and "10.99" and "29.99" are printed as the prices "price" on the third layer. The API call commands on the second layer do not include "\n", and therefore the "name" of the second layer and the "price" of the third layer are printed without line breaks.

In the example of the print data generation API illustrated in Fig. 6(b), the text styling "Alignment left" is specified at the start of the first layer, and therefore the text styling "Alignment left" is applied to all of the text strings printed on the basis of the print instruction commands generated from the print instruction API call command described on the first layer and the layers therebelow. Further, the styling instruction "Bold" is specified on the second layer, and therefore the text styling "Bold" is applied to all of the text strings printed on the basis of the print instruction commands generated from the print instruction API call command described on the second layer and the layers therebelow. Furthermore, the styling instruction "Underline" is specified on the third layer, and therefore the text styling "Underline" is applied to the text string printed on the basis of the print instruction command generated from the print instruction API call command described on the third layer.

### (Second Embodiment)

In the second embodiment, the template does not have a hierarchical structure and does not include the repeat start flag SF. The print API generation unit 11 specifies the repeat range RR on the basis of both the types of the API call commands included in the template and the field data.

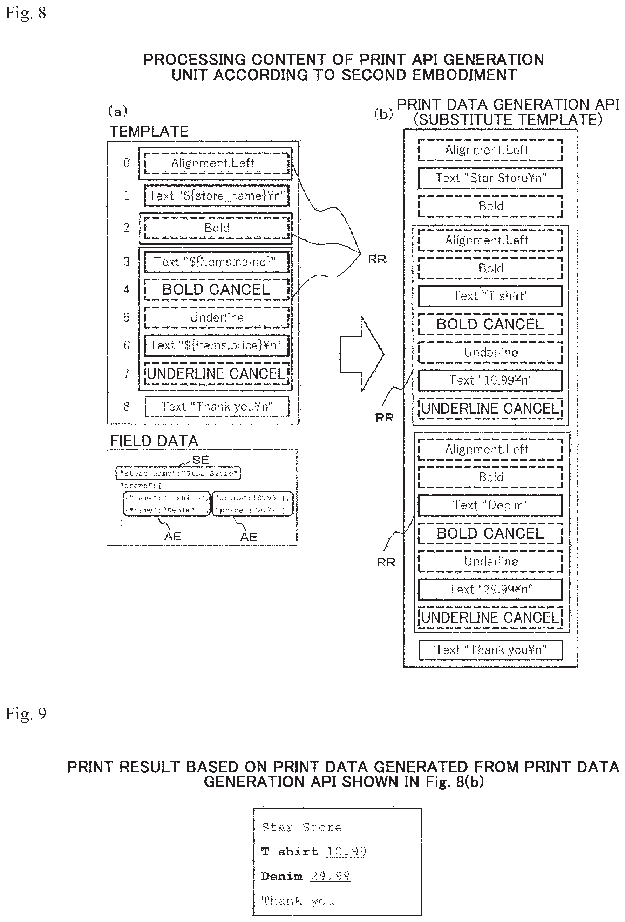

Fig. 8 is a diagram illustrating the processing content of the print API generation unit 11 according to the second embodiment. Note that in order to facilitate understanding of the description, indexes IDXᵢ (i = 0, 1, 2, ...) are set in ascending order from "0" in relation to the plurality of API call commands included in the template.

Fig. 8(a) illustrates an example of a template not having a hierarchical structure and field data, wherein the repeat range RR specified by the print API generation unit 11 is indicated on the template by rectangular frames. Since there is no hierarchical structure for specifying the application range of the text styling, the template includes both styling instruction API call commands for specifying the application of text styling and styling instruction API call commands for canceling the application of text styling. The field data are the same as the data illustrated in Fig. 6(a). Fig. 8(b) illustrates an example of a print data generation API (a substitute template) generated by replacing the merge fields included in the API call commands, including repeat substitutions within the specified range, with the data of the print elements included in the field data.

As illustrated in Fig. 8(a), the print API generation unit 11 specifies, from the print instruction API call commands including the substitution rule for the repeated array elements, among the plurality of print elements included in the field data, all of the API call commands included immediately before print instruction API call commands not including the array element substitution rule, and the styling instruction API call commands existing before the print instruction API call commands including the array element substitution rule, as the repeat range RR. Which of the plurality of API call commands included in the template are print instruction API call commands including the substitution rule for the array elements AE can be determined by referring to the field data using the text strings in the merge fields of the print instruction API call commands as a key.

In the template illustrated in Fig. 8(a), the API call commands with the indexes IDX₀ and IDX₂ are styling instruction API call commands existing prior to print instruction API call commands including the substitution rule for the array elements AE, and therefore these two commands are included in the repeat range RR. The API call command with the index IDX₁ is a print instruction API call command, but by referring to the field data using the text string "store_name" of the merge field as a key, it is determined that the print element corresponding to the text string "store_name" is not an array element AE. Accordingly, the API call command with the index IDX₁ is not included in the repeat range RR.

The API call command with the index IDX₃ is a print instruction API call command, and by referring to the field data using the text string "items.name" of the merge field as a key, it is determined that the print element corresponding to the text string "items.name" is an array element AE. Accordingly, the print API generation unit 11 determines that the API call command with the index IDX₃ is a print instruction API call command including the substitution rule for the array elements AE, and starts to search for the repeat range RR using this position as a start point.

The API call commands with the indexes IDX₄, IDX₅, and IDX₇ following the index IDX₃ are styling instruction API call commands. Furthermore, the API call command with the index IDX₆ is a print instruction API call command, and by referring to the field data using the text string "items.price" of the merge field as a key, it is determined that the print element corresponding to the text string "items.price" is an array element AE. Accordingly, the print API generation unit 11 determines that the API call commands with the indexes IDX₄ to IDX₇ are within the repeat range RR but that none thereof denote the end position of the repeat range RR.

The API call command with the index IDX₈ is a print instruction API call command, but the text string "Thank you" is not surrounded by the substitution rule "${}". Accordingly, the print API generation unit 11 determines that the API call command with the index IDX₈ is a print instruction API call command not including the substitution rule for the array elements AE, and therefore identifies the immediately preceding API call command with the index IDX₇ as the end position of the repeat range RR.

The print API generation unit 11 then generates a print data generation API (a substitute template) by replacing the merge fields of the plurality of print instruction API call commands included in the template with the data (the insertion values) of the print elements included in the field data. At this time, as illustrated in Fig. 8(b), the print API generation unit 11 copies the API call commands included in the specified repeat range RR until the number of copies is identical to the number of array elements included in the field data, and then repeatedly executes processing for replacing the merge fields of the print instruction API call commands with the array element data a number of times corresponding to the number of array elements.

Fig. 9 is a diagram illustrating a print result obtained in a case where print data generated by the print data generation unit 12 on the basis of the print data generation API illustrated in Fig. 8(b) are output to the printer 20. In the example of the print data generation API illustrated in Fig. 8(b), the "Underline" text styling is set in relation to the prices "price" following cancellation of the "Bold" text styling in relation to the product names "name". Accordingly, the product names are printed only with the bold text styling, and the prices are printed only with the underline text styling.

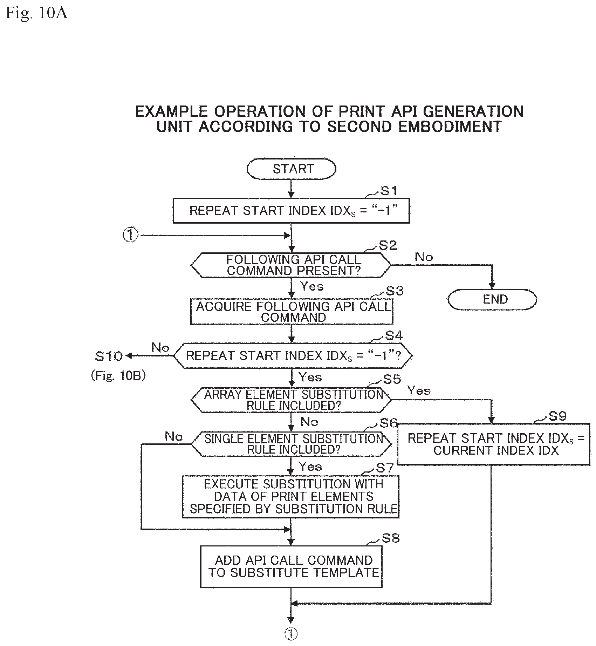

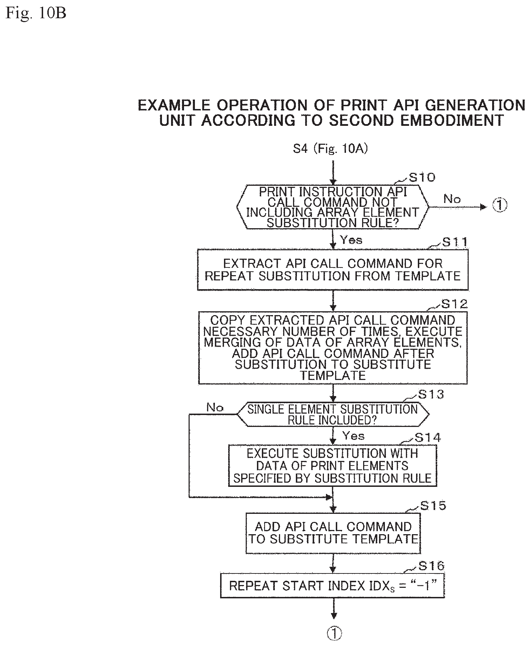

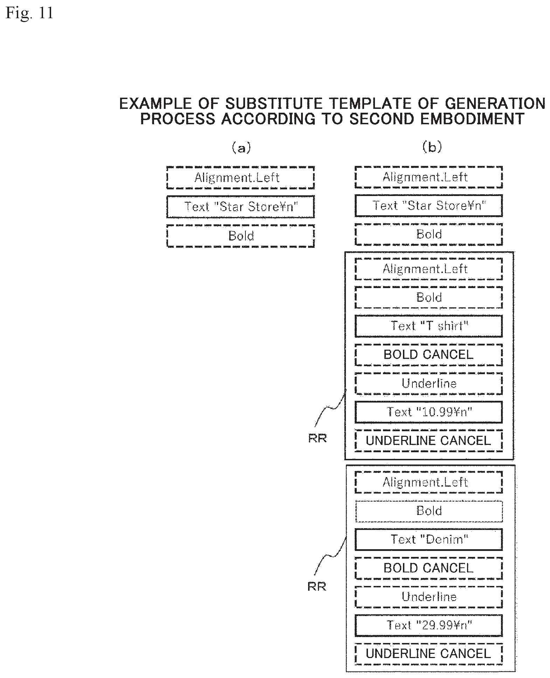

Figs. 10A and 10B are flowcharts illustrating an example operation of the print API generation unit 11 according to the second embodiment. Fig. 11 is a diagram illustrating an example of a substitute template during a generation process corresponding to the processing of these flowcharts. The operation will be described below with reference to Figs. 10A, 10B, and 11.

First, the print API generation unit 11 initializes the value of a repeat start index IDX_{S}, which is used as a parameter, to "-1" (step S1). Next, the print API generation unit 11 determines whether or not a following API call command exists in the template (step S2), and when no following command exists, the processing of the flowcharts illustrated in Figs. 10A and 10B is terminated.

When a following API call command exists, the print API generation unit 11 acquires the following API call command from the template (step S3) and determines whether or not the current value of the repeat start index IDX_{S} is "-1" (step S4). When the value of the repeat start index IDX_{S} is "-1", the print API generation unit 11 determines whether or not the API call command acquired in step S3 includes the array element substitution rule (step S5).

When the API call command does not include the array element substitution rule, the print API generation unit 11 determines whether or not the API call command includes the single element substitution rule (step S6). When the API call command includes the single element substitution rule, the print API generation unit 11 acquires the data of the single element specified by the substitution rule from the field data, and replaces the merge field of the API call command with the acquired data of the single element (step S7). The API call command is then added to the substitute template (step S8).

When, on the other hand, it is determined in step S6 that the API call command does not include the single element substitution rule, the processing of step S7 is skipped, and the API call command acquired in step S3 is added as is to the substitute template (step S8). Following the processing of step S8, the processing returns to step S2, where, if a following API call command exists, the following API call command is acquired (step S3).

At the stage where the API call commands with the indexes IDX₀ and IDX₂ illustrated in Fig. 8(a) have been acquired in step S3, the processing of step S7 is skipped, and the API call commands are added as is to the substitute template (step S8).
Further, at the stage where the API call command with the index IDX₁ illustrated in Fig. 8(a) has been acquired in step S3, the merge field of the API call command is replaced with the data of the single element specified by the substitution rule (step S7), whereupon the API call command is added to the substitute template (step S8). As a result of the stages up to this point, the substitute template is configured as illustrated in Fig. 11(a).

When it is determined in step S5 that the API call command includes the array element substitution rule, the value of the repeat start index IDX_{S} is updated to the current value of the index IDXᵢ of the API call command (step S9). The processing then returns to step S2. At the stage where the API call command with the index IDX₃ has been acquired in step S3, it is determined that the API call command includes the array element substitution rule, and therefore the value of the repeat start index IDX_{S} is updated to the index IDX₃. The index IDX₃ denotes the start position of the search for the repeat range RR.

When the value of the repeat start index IDX_{S} is updated, it is determined in step S4 after returning to step S2 that the value of the repeat start index IDX_{S} is not "-1". In this case, the print API generation unit 11 determines whether or not the API call command acquired in step S3 is a print instruction command that does not include the array element substitution rule (step S10). Here, when it is determined that the API call command is not a print instruction command that does not include the array element substitution rule, the processing returns to step S2. At the stage where the API call commands with the indexes IDX₄ to IDX₇ have been acquired in step S3, No is acquired in the determination of step S10.

When, on the other hand, it is determined in step S10 that the API call command is a print instruction command that does not include the array element substitution rule, the print API generation unit 11 extracts the API call commands to be subjected to repeat substitution, indicated hereafter, from the template (step S11):
- the styling instruction API call commands included from the start of the template up to a point one before the repeat start index IDX_{S}
- all of the API call commands included from the repeat start index IDX_{S} to a point one before the current index IDXᵢ.

In the example of Fig. 8(a), at the stage where the API call command with the index IDX₈ has been acquired in step S3, it is determined that this API call command is a print instruction command that does not include the array element substitution rule. Accordingly, the print API generation unit 11 acquires the styling instruction API call commands included in the indexes IDX₀ to IDX₂ from the start of the template up to the point one before the repeat start index IDX₃, and all of the API call commands included in the indexes IDX₃ to IDX₇ from the repeat start index IDX₃ to the point one before the current index IDX₈. The plurality of API call commands acquired here are set as the repeat range RR.

Next, the print API generation unit 11 copies the plurality of API call commands acquired in the step S11 until the number of copies is identical to the number of array elements included in the field data, and then repeatedly executes processing for replacing the merge fields of the print instruction API call commands with the data of the array elements a number of times corresponding to the number of array elements. The executed plurality of API call commands are then added to the substitute template (step S12). As a result of the stages up to this point, the substitute template is configured as illustrated in Fig. 11(b).

Next, the print API generation unit 11 determines whether or not the API call command with the index IDX₈, acquired in step S3, includes the single element substitution rule (step S13). When the API call command includes the single element substitution rule, the print API generation unit 11 acquires the data of the single element specified by the substitution rule from the field data, and replaces the merge field of the API call command with the acquired single element data (step S14). The API call command is then added to the substitute template (step S15).

When, on the other hand, the API call command does not include the single element substitution rule, the processing of step S14 is skipped, and the API call command acquired in step S3 is added as is to the substitute template (step S15). By executing the processing of step S15, the substitute template enters the state illustrated in Fig. 8(b). Then, the print API generation unit 11 returns the value of the repeat start index IDX_{S} to the initial value "-1" (step S16) and then returns to step S2. In the example template illustrated in Fig. 8(a), there are no API call commands following the index IDX₈, and therefore the processing of the flowcharts illustrated in Figs. 10A and 10B is terminated.

### (Third Embodiment)

In the third embodiment, the template has a hierarchical structure but does not include the repeat start flag SF. In the third embodiment, the repeat range RR is specified on the basis of both the types of the API call commands included in the template and the field data, and also the hierarchical structure of the API call commands.

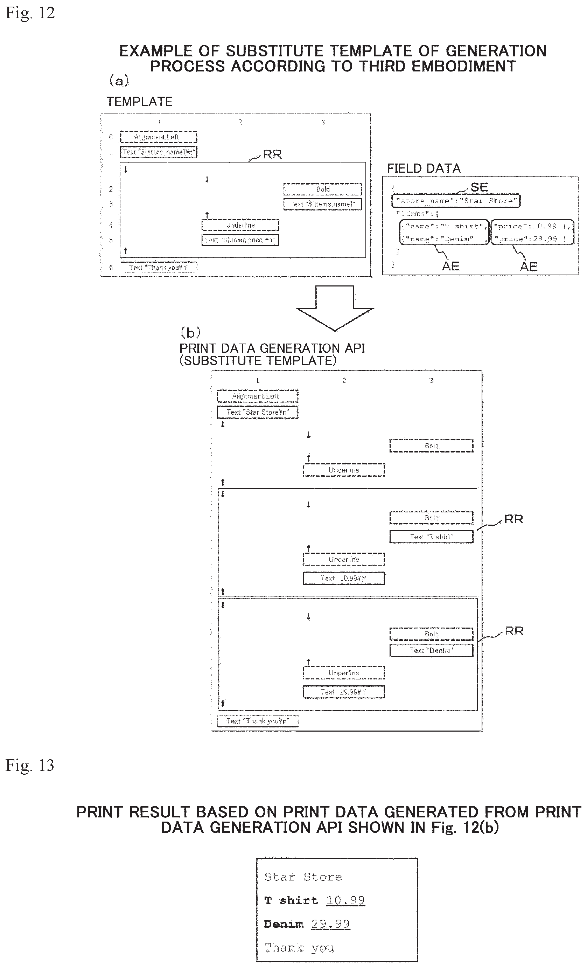

Fig. 12 is a diagram illustrating the processing content of the print API generation unit 11 according to the third embodiment. Fig. 12(a) illustrates an example of a template having a hierarchical structure and field data, wherein the repeat range RR specified by the print data API generation unit 11 is indicated on the template by a rectangular frame. The template includes hierarchy control functions, and in the figure, the symbol "↓" indicates downward movement through the layers of the hierarchy, and the symbol "↑" indicates upward movement through the layers of the hierarchy. The repeat range RR also includes hierarchy control functions. The field data are the same as the data illustrated in Fig. 6(a). Fig. 12(b) illustrates an example of a print data generation API (a substitute template) generated by replacing the merge fields included in the API call commands, including repeat substitutions within the specified range, with the data of the print elements included in the field data.

As illustrated in Fig. 12(a), the print API generation unit 11 specifies styling instruction API call commands and print instruction API call commands including the substitution rule for the repeated array elements, among the plurality of print elements included in the field data, as the repeat range RR from among the API call commands included on the uppermost layer and the layers therebelow, of the layers of the hierarchy that include print instruction API call commands including the array element substitution rule. The repeat range RR also includes hierarchy control functions associated with the specified API call commands, as described above. In the example of Fig. 12(a), the repeat range RR includes, as the associated hierarchy control functions, hierarchy control functions (four hierarchy control functions indicated by the symbols "↓" and "↑" on the first and second layers) for controlling transitions to the second and third layers including the specified API call commands and transitions from these layers. Which of the plurality of API call commands included in the template are print instruction API call commands including the substitution rule for the array elements AE can be determined by referring to the field data using the text strings in the merge fields of the print instruction API call commands as a key.

In the template illustrated in Fig. 12(a), there are no print instruction API call commands including the substitution rule for the array elements AE on the first layer, but there are instruction API call commands including the substitution rule for the array elements AE on the second and third layers. Accordingly, the print API generation unit 11 specifies the styling instruction API call commands, the print instruction API call commands including the array element substitution rule, and the hierarchy control functions associated therewith, among the API call commands included on the second layer and the layers therebelow, as the repeat range RR. In the example illustrated in Fig. 12(a), there is no print instruction API call command including the substitution rule for the single element SE on the second layer and the layers therebelow, and therefore all of the API call commands on the second layer and the layers therebelow are included in the repeat range RR.

The print API generation unit 11 generates the print data generation API (the substitute template) by replacing the merge fields of the plurality of print instruction API call commands included in the template with the data (the insertion values) of the print elements included in the field data. At this time, as illustrated in Fig. 12(b), the print API generation unit 11 copies the API call commands and the associated hierarchy control functions included in the specified repeat range RR until the number of copies is identical to the number of array elements included in the field data, and then repeatedly executes processing for replacing the merge fields of the print instruction API call commands with the array element data a number of times corresponding to the number of array elements.

Fig. 13 is a diagram illustrating a print result obtained in a case where print data generated by the print data generation unit 12 on the basis of the print data generation API illustrated in Fig. 12(b) are output to the printer 20. In the example of the print data generation API illustrated in Fig. 12(b), the "Bold" text styling is specified in relation to the product names "name" on the third layer, and the "Underline" text styling is specified thereafter in relation to the prices "price" on the second layer. Accordingly, the product names are printed only with the bold text styling, and the prices are printed only with the underline text styling.

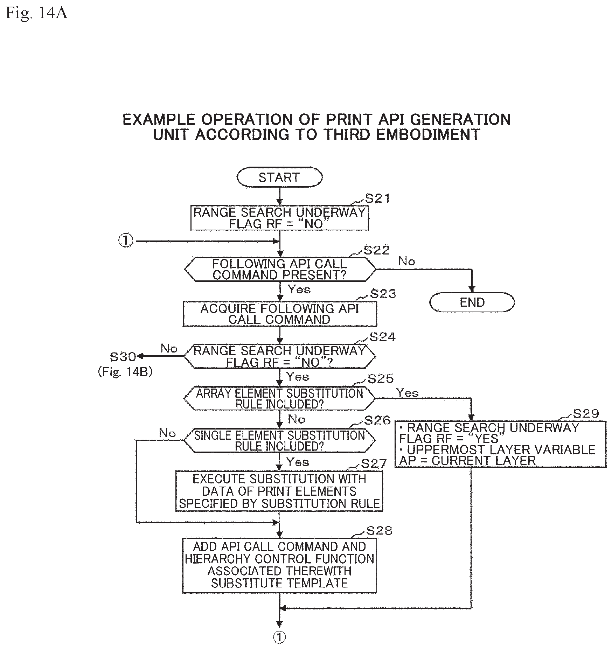

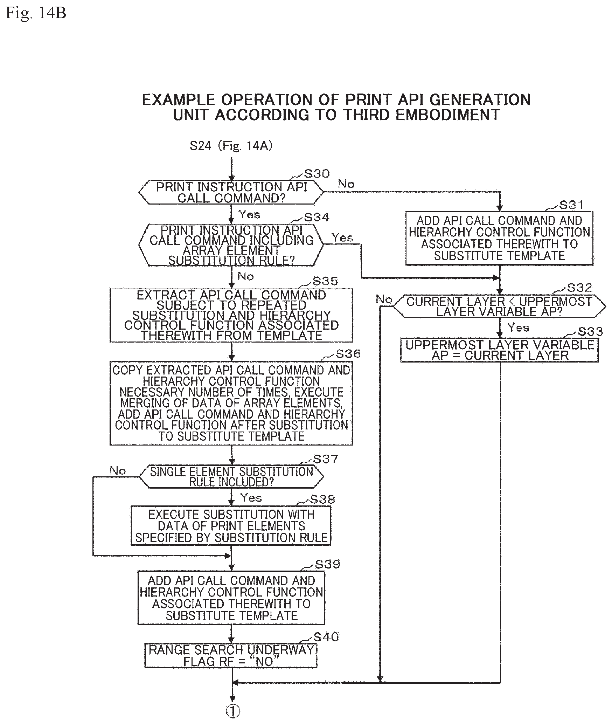

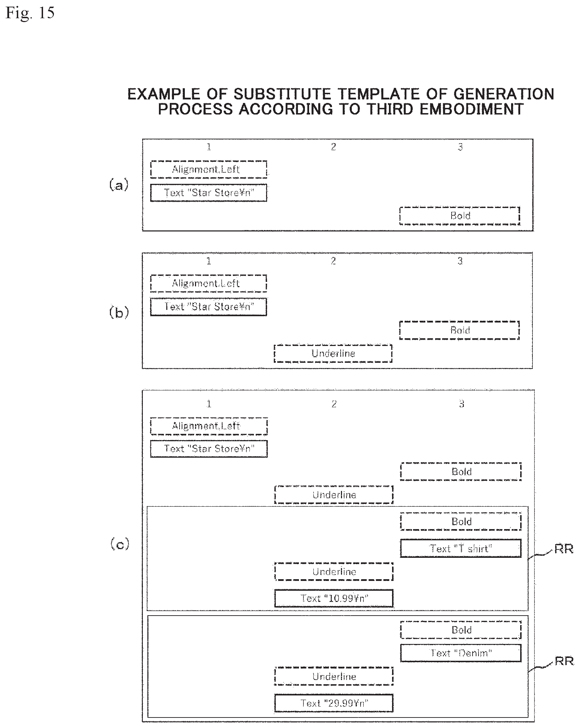

Figs. 14A and 14B are flowcharts illustrating an example operation of the print API generation unit 11 according to the third embodiment. In these flowcharts, a range search underway flag RF indicating whether or not the search for the repeat range RR is underway and an uppermost layer variable AP indicating the uppermost layer of the repeat range RR are used as parameters. Fig. 15 is a diagram illustrating an example of a substitute template during a generation process corresponding to the processing of these flowcharts. The operation will be described below with reference to Figs. 14A, 14B, and 15. Note that the symbols "↑" and "↓" indicating the hierarchy control functions have been omitted from Fig. 15.

First, the print API generation unit 11 initializes the value of the range search underway flag RF to "No" (step S21). Next, the print API generation unit 11 determines whether or not a following API call command exists in the template (step S22), and when no following command exists, the processing of the flowcharts illustrated in Figs. 14A and 14B is terminated.

When a following API call command exists, the print API generation unit 11 acquires the following API call command from the template (step S23) and determines whether or not the current value of the range search underway flag RF is "No" (step S24). When the value of the range search underway flag RF is "No", the print API generation unit 11 determines whether or not the API call command acquired in step S23 includes the array element substitution rule (step S25).

When the API call command does not include the array element substitution rule, the print API generation unit 11 determines whether or not the API call command includes the single element substitution rule (step S26). When the API call command includes the single element substitution rule, the print API generation unit 11 acquires the data of the single element specified by the substitution rule from the field data, and replaces the merge field of the API call command with the acquired data of the single element (step S27). The API call command is then added to the substitute template (step S28). At this time, if there is a hierarchy control function associated with the API call command, the hierarchy control function is added to the substitute template together therewith.

When, on the other hand, it is determined in step S26 that the API call command does not include the single element substitution rule, the processing of step S27 is skipped, and the API call command acquired in step S23 is added as is to the substitute template (step S28). At this time, if there is a hierarchy control function associated with the API call command, the hierarchy control function is added to the substitute template together therewith. Following the processing of step S28, the processing returns to step S22, where, if a following API call command exists, the following API call command is acquired (step S23).

At the stage where the API call commands with the indexes IDX₀ and IDX₂ illustrated in Fig. 12(a) have been acquired in step S23, the processing of step S27 is skipped, and the API call commands are added as is to the substitute template (step S28). At this time, the hierarchy control function associated with the API call command with the index IDX₂ is added to the substitute template together therewith. Further, at the stage where the API call command with the index IDX₁ illustrated in Fig. 12(a) has been acquired in step S23, the merge field of the API call command is replaced with the data of the single element specified by the substitution rule (step S27), whereupon the API call command is added to the substitute template (step S28). As a result of the stages up to this point, the substitute template is configured as illustrated in Fig. 15(a).

When it is determined in step S25 that the API call command includes the array element substitution rule, the value of the range search underway flag RF is updated to "Yes", and the uppermost layer variable AP is set at the value of the current layer of the API call command (step S29). The processing then returns to step S22. At the stage where the API call command with the index IDX₃ has been acquired in step S23, it is determined that the API call command includes the array element substitution rule, and therefore the value of the range search underway flag RF is updated to "Yes", and the value "3" indicating the third layer is set as the value of the uppermost layer variable AP.

When the value of the range search underway flag RF is updated to "Yes", it is determined in step S24 performed after returning to step S22 that the value of the range search underway flag RF is not "No". In this case, the print API generation unit 11 determines whether or not the API call command acquired in step S23 is a print instruction command (step S30). Here, when it is determined that the API call command is not a print instruction command, the print API generation unit 11 adds the API call command acquired in step S23 as is to the substitute template (step S31). At this time, if there is a hierarchy control function associated with the API call command, the hierarchy control function is added to the substitute template together therewith. The substitute template is configured as illustrated in Fig. 15(b) until the stage where the API call command with the index IDX₄ is acquired. At this time, the hierarchy control function associated with the API call command with the index IDX₄ is added to the substitute template together therewith.

Next, the print API generation unit 11 determines whether or not the value of the current layer is smaller than the value of the uppermost layer variable AP (step S32). When the value of the current layer is smaller, the value of the uppermost layer variable AP is updated to the value of the current layer (step S33). The processing then returns to step S22. When, on the other hand, the value of the current layer is not smaller than the value of the uppermost layer variable AP, the processing of step S33 is skipped and the processing returns to step S22. At the stage where the API call command with the index IDX₄ has been acquired in step S23, the processing of step S33 is executed so as to update the value of the uppermost layer variable AP to the value "2" of the current layer.

When it is determined in step S30 that the API call command acquired in step S23 is a print instruction command, the print API generation unit 11 then determines whether or not the print instruction API call command includes the array element substitution rule (step S34). Here, when it is determined that the command includes the array element substitution rule, the processing advances to step S32. At the stage where the API call command with the index IDX₅ has been acquired in step S23, since the command includes the array element substitution rule, the processing advances to step S32. In this case, the value of the current layer is not smaller than the value of the uppermost layer variable AP, and therefore the processing of step S33 is skipped and the processing returns to step S22.

When, on the other hand, it is determined in step S34 that the command does not include the array element substitution rule, the print API generation unit 11 extracts the API call commands of the repeat substitution subjects and the associated hierarchy control functions from the template (step S35). In the third embodiment, the styling instruction API call commands and the print instruction API call commands including the array element substitution rule, among the API call commands included on the uppermost layer, indicated by the uppermost layer variable AP, and the layers therebelow, as well as the hierarchy control functions associated therewith are extracted from the template. In the example of Fig. 12(a), the API call commands with the indexes IDX₂ to IDX₅ and the hierarchy control functions associated therewith are extracted from the template. The plurality of API call commands and hierarchy control functions extracted here are set as the repeat range RR.

Next, the print API generation unit 11 copies the plurality of API call commands and hierarchy control functions acquired in step S35 until the number of copies is identical to the number of array elements included in the field data, and then repeatedly executes processing for replacing the merge fields of the print instruction API call commands with the data of the array elements a number of times corresponding to the number of array elements. The executed plurality of API call commands and the hierarchy control functions are then added to the substitute template (step S36). As a result of the stages up to this point, the substitute template is configured as illustrated in Fig. 15(c).

Next, the print API generation unit 11 determines whether or not the API call command with the index IDX₆, acquired in step S23, includes the single element substitution rule (step S37). When the API call command includes the single element substitution rule, the print API generation unit 11 acquires the data of the single element specified by the substitution rule from the field data, and replaces the merge field of the API call command with the acquired data of the single element (step S38). The API call command is then added to the substitute template (step S39). At this time, if there is a hierarchy control function associated with the API call command, the hierarchy control function is added to the substitute template together therewith.

When, on the other hand, the API call command does not include the single element substitution rule, the processing of step S38 is skipped, and the API call command acquired in step S23 is added as is to the substitute template (step S39). At this time, if there is a hierarchy control function associated with the API call command, the hierarchy control function is added to the substitute template together therewith. By executing the processing of step S39, the substitute template enters the state illustrated in Fig. 12(b). Next, the print API generation unit 11 returns the value of the range search underway flag RF to the initial value "No" (step S40) and then returns to step S22. In the example template illustrated in Fig. 12(a), there are no API call commands following the index IDX₆, and therefore the processing of the flowcharts illustrated in Figs. 14A and 14B is terminated.

In this embodiment, as described in detail above, print data including a plurality of print-related commands are generated using a template and field data including data of print elements to be inserted into merge fields of API call commands included in the template. In the template, the plurality of API call commands are constituted by a group of commands of the smallest unit not including repetitions, the number of which corresponds to the number of print elements, which is variable. A print data generation API including a plurality of API call commands is then generated by specifying the repeat range RR from among the plurality of API call commands included in the template, and replacing the merge fields included in the API call commands, including repeat substitutions within the specified range, with the data of the print elements, whereupon print data including print-related commands into which the data of the print elements have been inserted is generated by executing the generated print data generation API.

According to this embodiment, configured as described above, the print data generation API is generated by copying the print instruction API call commands including the array element substitution rule and the styling instruction API call commands associated therewith in the required number in accordance with the number of array elements, and then inserting the data of the array elements into the merge fields, whereupon the print data are generated by executing the print data generation API. In the call source application (the print data generation program), therefore, the API call commands included in the generated print data generation API need only be executed once each in order from the start. Thus, print data with a variable number of print elements can be generated and merge printing can be executed without incorporating description required in order to repeatedly call the API call commands in the program code of the call source application. As a result, the readability of the program code of the application serving as the API call source can be improved.

Note that in the first embodiment described above, the repeat start flag SF may be set in a plurality of locations within the template. For example, when merge printing is performed by disposing a print element with a fixed number of elements after a print element with a variable number of elements and disposing a print element with a variable number of elements thereafter, the repeat start flag SF can be set in two locations corresponding respectively to the first print element with a variable number of elements and the next print elements with a variable number of elements.

Furthermore, in the second and third embodiments described above, examples in which the repeat range RR is specified on the basis of both the types of the API call commands and the field data were described, but the repeat range RR may be specified without referring to the field data. For example, the types of the API call commands may be determined on the basis of the text strings of the API call commands, and the repeat range RR may be specified on the basis of the types of the API call commands. In this case, associations indicating which text strings correspond to which types of API call commands are defined in advance, whereupon a template and a program that references the template are created in accordance with the definitions.

Moreover, in the third embodiment described above, an example was described in which the repeat range RR is specified by extracting from the template the styling instruction API call commands and the print instruction API call commands including the array element substitution rule, among the API call commands included on the layers below the uppermost layer indicated by the uppermost layer variable AP. However, this can similarly be applied to the first embodiment. In other words, of the API call commands included in the layer including the repeat start flag SF and the layers therebelow, the styling instruction API call commands and the print instruction API call commands including the array element substitution rule may be specified as the repeat range RR.

Furthermore, in the first to third embodiments described above, configurations in which the template includes a plurality of API call commands were described, but the template may be configured to include only one API call command. In this case, for example, the print API generation unit 11 determines whether or not the API call command included in the template is a print instruction API call command including the substitution rule for repeated array elements, and having determined that the API call command is a print instruction API call command including the array element substitution rule, specifies the command as the API call command repeat range.

Furthermore, in the first to third embodiments described above, an example was described in which the template is configured to include one or more API call commands (called API call format hereinafter) using the API call command as an example of the generation command, but the template is not limited to this format. Any template can be used as the template as long as it has a data structure or format that can be defined by the substitution rules. For example, the template may have instructions for generating print-related commands in a format written in a markup language (hereinafter referred to as a markup language format), or may have instructions for generating print-related commands in a format written as printer commands (hereinafter referred to as a printer command format).

Here, markup language refers to a language that describes specifications related to the logical structure of text, modification information, and supplementary information together with text inside the text data. In the case of the markup language format, a text file in which print instruction and styling instruction generation commands are marked up with predetermined symbols or the like (the markup portion being metadata) is used as the template. The instruction content including the substitution rules is written as text in the text file. For example, a generation command for a print instruction including the substitution rules is marked up by a symbol $ {}, and the instruction content of the substitution rules is represented by an internal text string surrounded by ${}. In addition, a generation command for a styling instruction is marked up by a symbol [], and the instruction content is represented by an internal text string surrounded by []. Hereinafter, generation commands marked up with predetermined symbols or the like will be referred to as markup commands.

In the case of the printer command format, each character to be printed and each character representing the substitution rules is represented by text (e.g., ASCII characters), and binary data representing print instruction and styling instruction generation commands with predetermined control characters that can be understood by the printer 20 is used as the template. The print data transmitted from the host device 10 to the printer 20 (those generated by the print data generation unit 12) are a mixture of text of characters to be printed and control character commands. Accordingly, a template in the printer command format can be configured by including the substitution rules in the text part of the print data. Table 1 shows an example of the printer commands (control characters).

**[Table 1]**

| **Printer command** | **Meaning** |
|---|---|
| 0x1b 0x1d 0x61 0x00 | Left alignment printing |
| 0x1b 0x45 | Bold enable |
| 0x1b 0x46 | Bold disable |
| 0x1b 0x2d 0x01 | Underline enable |
| 0x1b 0x2d 0x00 | Underline disable |
| 0x0a | Line break |
| 0x1b 0x1d 0x72 0x6b 0x01 | Layer added |
| 0x1b 0x1d 0x72 0x6b 0x00 | End of layer |
| 0x1b 0x1d 0x72 0x70 0x01 | Repeat start flag |

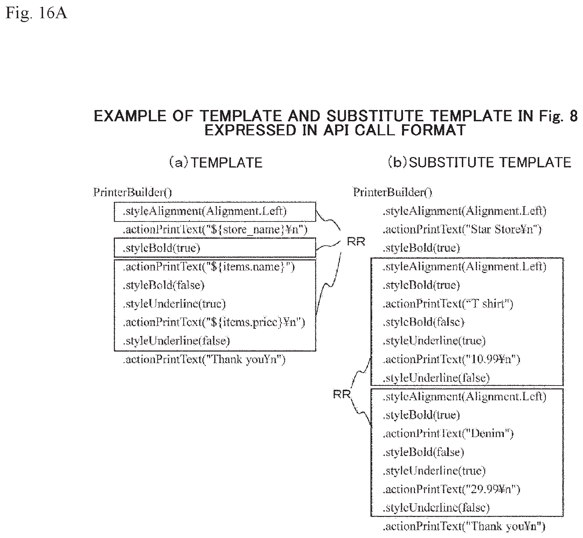

The first to third embodiments described with the API call format can be applied in the same manner for both the markup language format and the printer command format. Figs. 16A to 16C are diagrams illustrating examples of the templates and substitute templates illustrated in Fig. 8 and described in the second embodiment, in API call format, markup language format, and printer command format, respectively, for example.

Fig. 16A illustrates the template and the substitute template schematically illustrated in Fig. 8 rewritten in program code expressions. In Fig. 16A(a), which illustrates a template in this API call format, ".styleAlignment(...)", ".styleBold(...)", and ".styleUnderline(...)" are styling instruction API call commands, and ".actionPrintText(...)" is a print instruction API call command. Fig. 16A(b) is a substitute template (print data generation API) in API call format, generated from the template illustrated in Fig. 16A(a) and the same field data as that in Fig. 8(a).

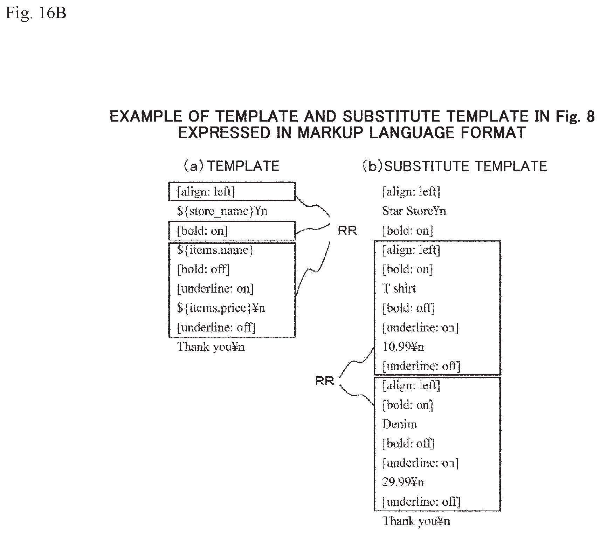

In contrast, in Fig. 16B(a), which illustrates the template in markup language format, the part surrounded by ${} is the markup location representing the generation command for the print instructions including the substitution rules, and the part surrounded by [] is the markup location representing the generation command for the styling instructions. The template in markup language format illustrated in Fig. 16B(a) has the same structure as the template illustrated in Fig. 8(a), except that the API call commands have been replaced with markup commands. Accordingly, an algorithm similar to the flowchart illustrated in Figs. 10A and 10B can be applied to the template in the markup language format illustrated in Fig. 16B(a).

As a result, as illustrated in Fig. 16B(a), a repeat range RR similar to that of Fig. 8(a) is specified, and substitution of the merge fields, including repeat substitutions within the specified range, is performed. Here, when replaced with the data of the print elements included in the same field data as in Fig. 8(a), the generated substitute template becomes as illustrated in Fig. 16B(b) and has the same structure as the substitute template illustrated in Fig. 8(b). As a result, when print data is generated from the substitute template illustrated in Fig. 16B(b)), transmitted to the printer 20, and printed, the print result is the same as that in Fig. 9.

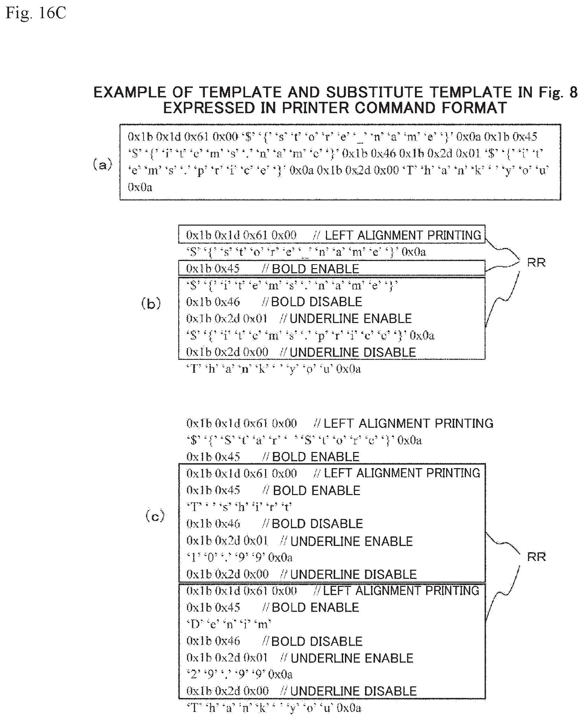

The template in printer command format is binary data in which the control characters of the generation commands and the text (ASCII characters) of each character are mixed, as illustrated in Fig. 16C(a). When this is classified and organized into control characters and text, the result is as illustrated in Fig. 16C(b). This has the same structure as the template illustrated in Fig. 8(a), except that the API call commands have been replaced with control characters and text. Accordingly, an algorithm similar to the flowchart illustrated in Figs. 10A and 10B can be applied to the template in the printer command format illustrated in Fig. 16C(a).

As a result, as illustrated in Fig. 16C(b), a repeat range RR similar to that of Fig. 8(a) is specified, and substitution of the merge fields, including repeat substitutions within the specified range, is performed. Here, when replaced with the data of the print elements included in the same field data as in Fig. 8(a), the generated substitute template becomes as illustrated in Fig. 16C(c) and has the same structure as the substitute template illustrated in Fig. 8(b). As a result, when print data is generated from the substitute template illustrated in Fig. 16C(c), transmitted to the printer 20, and printed, the print result is the same as that in Fig. 9.

An example of configuring the template of Fig. 8(a) described in the second embodiment in markup language format and printer command format has been described here, but the template of Fig. 6(a) described in the first embodiment and the template of Fig. 12(a) described in the third embodiment can also be configured in markup language format and printer command format in the same manner.

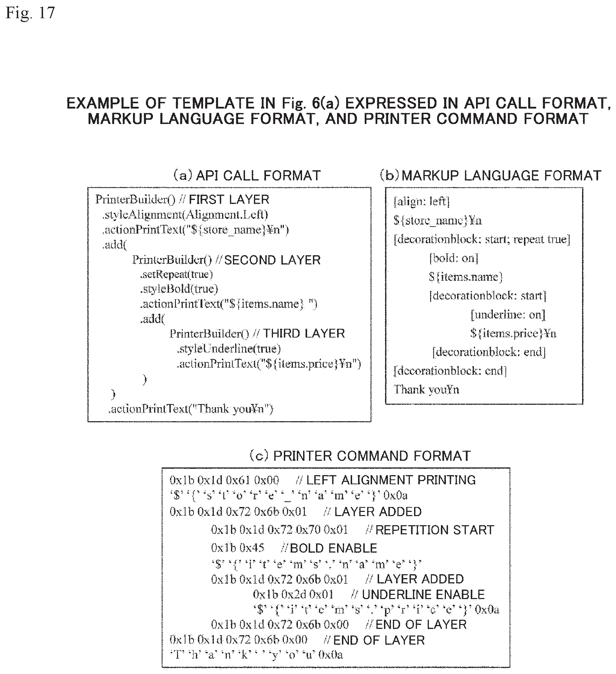

Note that in the first embodiment and the third embodiment, the hierarchy control functions are included in the template, and in the first embodiment, the repeat start flag SF is further included in the template. Fig. 17 is a diagram illustrating an example of the template in Fig. 6(a), schematically illustrated in the first embodiment, expressed in API call format, markup language format, and printer command format. Note that in Fig. 17, the hierarchy is expressed with indentations corresponding to the layers to make the hierarchy easier to see. The hierarchy control functions and the repeat start flag SF, which are not included in Figs. 16A to 16C, will be described here.

As illustrated in Fig. 17(a), in the case of the API call format, the hierarchical control functions are expressed as add functions. By calling the add function, the hierarchy of the API call command group specified in the argument thereof is deepened by one layer. Then, at the end of the add function, the hierarchy of the API call command group specified in the argument thereof is reduced by one layer (is restored to the original state). Here, the symbol "↓" illustrated in Fig. 6(a) is expressed as ".add(", and the symbol of "↑" is denoted as ")".
The sixth text string ".setRepeat (true)" from the top indicates the repeat start flag SF.

As illustrated in Fig. 17(b), in the case of markup language format, the hierarchy is deepened by one layer with the text string "decorationblock:start" included in the brackets [] indicating the markup location, and the hierarchy is reduced by one layer (restored to the original state) with the text string "decorationblock:end". In other words, the symbol "↓" illustrated in Fig. 6(a) is denoted by the text string [decorationblock:start], and the symbol "↑" is denoted by the text string [decorationblock:end]. In addition, the text string "repeat true" included in the third markup location from the top indicates the repeat start flag SF.

As illustrated in Fig. 17(c), in the case of printer command format, the hierarchy is deepened by one layer by the add command "0x1b 0x1d 0x72 0x6b 0x01", and the hierarchy is reduced by one layer (restored to the original state) by the end command "0x1b 0x1d 0x72 0x6b 0x00". By the end command of the hierarchy, the style set below the current layer is canceled inside the printer 20. The command "0x1b 0x1d 0x72 0x70 0x01" indicates the repeat start flag SF.

The foregoing first to third embodiments described an example in which the substitute template configured having the same format structure as the template is used as the data for print data generation (the print data generation API) by replacing the merge fields included in the API call commands with the data of the print elements, but the present invention is not limited thereto. The substitute template may be a data structure or format having the data of the print elements replaced with the field data and sufficient information for the print data generation unit 12 to convert to printer commands. Therefore, the pre-substitution template and the substitute template do not necessarily need to have the same format structure.

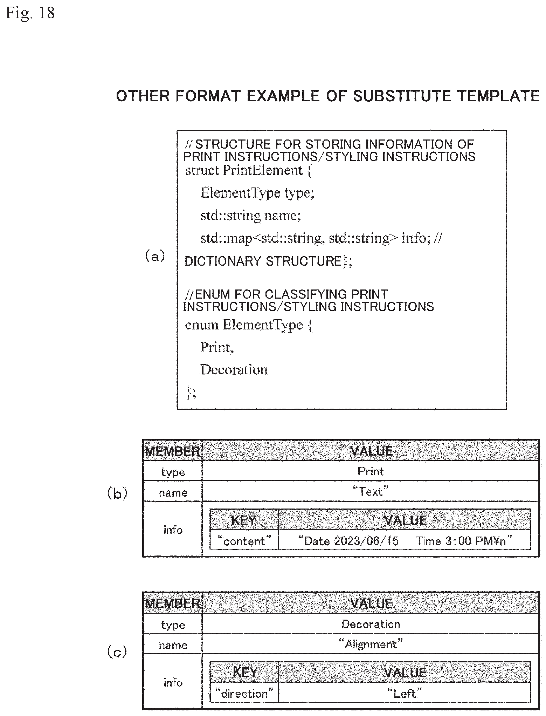

For example, data for print data generation configured having a structure representing the type of the instructions by the print-related commands, the instruction types, and the data of the print elements may be generated as the substitute template generated by replacing the merge fields with the data of the print elements. As an example, as illustrated in Fig. 18(a), the substitute template may be configured with a data structure similar to a program language C++ structure, having a type member for classifying print instructions and styling instructions, a name member of a text string indicating the type of the instruction, and an info member of a dictionary storing the necessary information regarding the instruction, and the substitute template configured having that data structure may be converted into print data including the print-related commands. This can be applied to any of the first to third embodiments described above.

When a substitute template having the data structure illustrated in Fig. 18(a) is used, the information corresponding to the print instruction API call command "actionPrintText" of the substitute template illustrated in Fig. 5, for example, can be stored with values such as those indicated in Fig. 18(b), with respect to the data structure illustrated in Fig. 18(a). Additionally, information corresponding to the styling instruction API call command "styleAlignment" of the substitute template illustrated in Fig. 5 can be stored with values such as those indicated in Fig. 18(c), with respect to the data structure illustrated in Fig. 18(a).

Although an example of generating the substitute template in C++ format from the template in API call format has been described here, it is also possible to generate the substitute template in C++ format from a template in markup language format or printer command format template. In addition, C++ format is one example of a format different from the template from before the substitution, and the format is not limited thereto. For example, a substitute template in markup language format or printer command format may be generated from the template in API call format, a substitute template in API call format or printer command format may be generated from markup language format, or a substitute template in markup language format may be generated from printer command format or API call format.

The foregoing first to third embodiments described an example in which the substitute template is generated by replacing the merge fields included in the API call commands with the data of the print elements, and then the data for print data generation (the print data generation API) is generated from the substitute template, but the present invention is not limited thereto. For example, the print data may be generated by successively generating a plurality of API call commands including substitute API call commands by substituting the merge fields with the data of the print elements, including repeat substitutions within a specified range, and sequentially generating print-related commands (printer commands) from the API call commands each time one of the API call commands is generated.

For example, when generating print data from the template and the field data illustrated in Fig. 6(a) in the first embodiment, the processing may be executed through the following steps. (0) First, a setting value of style information is set to an initial value. For example, an Alignment designation is set to "Left", a Bold designation is set to "false", and an Underline designation is set to "false".
(1) The styling instruction API call command "Alignment Left" is executed, a left alignment printer command is generated, and the setting value of the Alignment designation in the first layer is set to "Left" (no change from the initial value).
(2) A printer command for printing "Star Store\n" of the print elements is generated by executing the print instruction API call command "Text"${store_name}\n"" including the single element substitution rule.
   Next, in steps (3) to (8), a first instance of processing is performed for the repeat range specified by the repeat start flag SF.
(3) The styling instruction API call command "Bold" is executed, a bold enable printer command is generated, and the setting value of the Bold designation in the second layer is set to "true".
(4) A printer command for printing "T shirt" among the print elements is generated by executing the print instruction API call command "Text"${items.name}"" including the substitution rule according to the repeated array elements.
(5) The styling instruction API call command "Underline" is executed, an underline enable printer command is generated, and the setting value of the Underline designation in the third layer is set to "true".
(6) A printer command for printing "10.99\n" among the print elements is generated by executing the print instruction API call command "Text"${items.price}\n"" including the substitution rule according to the repeated array elements.
(7) When exiting the third layer, the setting value "true" for the Underline designation in the third layer and the setting value "false" for the Underline designation in the second layer are different, and thus an Underline disable printer command is generated to produce the Underline designation setting value in the second layer.
(8) When exiting the second layer, the setting value "true" for the Bold designation in the second layer and the setting value "false" for the Bold designation in the first layer are different, and thus a Bold disable printer command is generated to produce the setting value for the bold designation in the first layer.
   Next, in steps (9) to (14), a second instance of processing is performed for the repeat range specified by the repeat start flag SF.
(9) The styling instruction API call command "Bold" is executed, a bold enable printer command is generated, and the setting value of the Bold designation in the second layer is set to "true".
(10) A printer command for printing "Denim" among the print elements is generated by executing the print instruction API call command "Text"${items.name}"" including the substitution rule according to the repeated array elements.
(11) The styling instruction API call command "Underline" is executed, an underline enable printer command is generated, and the setting value of the Underline designation in the third layer is set to "true".
(12) A printer command for printing "29.99\n" among the print elements is generated by executing the print instruction API call command "Text"${items.price}\n"" including the substitution rule according to the repeated array elements.
(13) When exiting the third layer, the setting value "true" for the Underline designation in the third layer and the setting value "false" for the Underline designation in the second layer are different, and thus an Underline disable printer command is generated to produce the Underline designation setting value in the second layer.
(14) When exiting the second layer, the setting value "true" for the Bold designation in the second layer and the setting value "false" for the Bold designation in the first layer are different, and thus a Bold disable printer command is generated to produce the setting value for the bold designation in the first layer.
(15) Finally, a printer command for printing "Thank you\n" is generated by executing the print instruction API call command "Text"Thank you\n "" not including the substitution rule.

An example of sequentially generating printer commands from the template of Fig. 6(a) described in the first embodiment has been described here, but it is possible to sequentially generate printer commands from these templates in the same manner for the template of Fig. 8(a) described in the second embodiment and the template of Fig. 12(a) described in the third embodiment. Additionally, an example of sequentially generating printer commands from a template in API call format has been described here, but it is possible to sequentially generate printer commands from a template in markup language format or printer command format in the same manner.

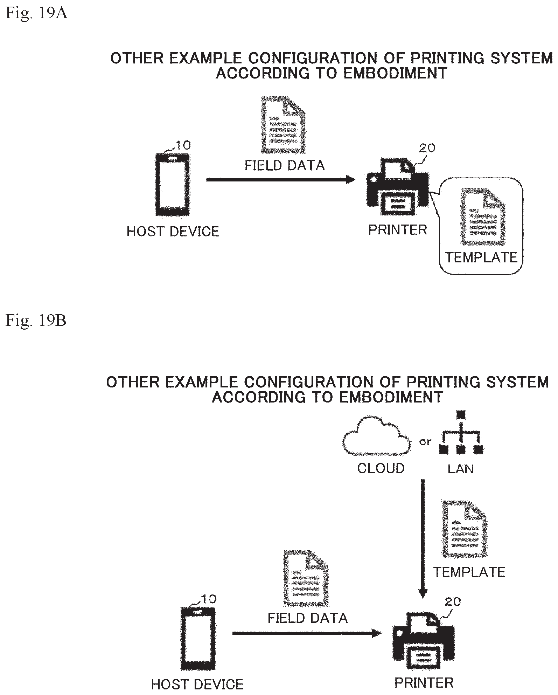

The foregoing first to third embodiments described a system configuration in which, as illustrated in Figs. 1 and 3, the host device 10 includes the print API generation unit 11, the print data generation unit 12, the template storage unit 14, and the field data storage unit 15; the host device 10 generates the print data generation API (the data for print data generation) and the print data, and the generated print data is transmitted from the host device 10 to the printer 20 to execute printing. However, the present invention is not limited to this system configuration. For example, the system may be configured as illustrated in Figs. 19A to 19H.

In the system configuration illustrated in Fig. 19A, the host device 10 includes the field data storage unit 15, while the printer 20 includes the print API generation unit 11, the print data generation unit 12, and the template storage unit 14. The printer 20 executes the processing of the print API generation unit 11 and the print data generation unit 12 by combining the template held by the printer 20 itself and the field data transmitted from the host device 10, and executes printing on the basis of the generated print data.

In the system configuration illustrated in Fig. 19B, the host device 10 includes the field data storage unit 15, a server (e.g., a server on the cloud or a server on a LAN; the same applies hereinafter) includes the template storage unit 14, and the printer 20 includes the print API generation unit 11 and the print data generation unit 12. The printer 20 executes the processing of the print API generation unit 11 and the print data generation unit 12 by combining the template transmitted from the server and the field data transmitted from the host device 10, and executes printing on the basis of the generated print data.

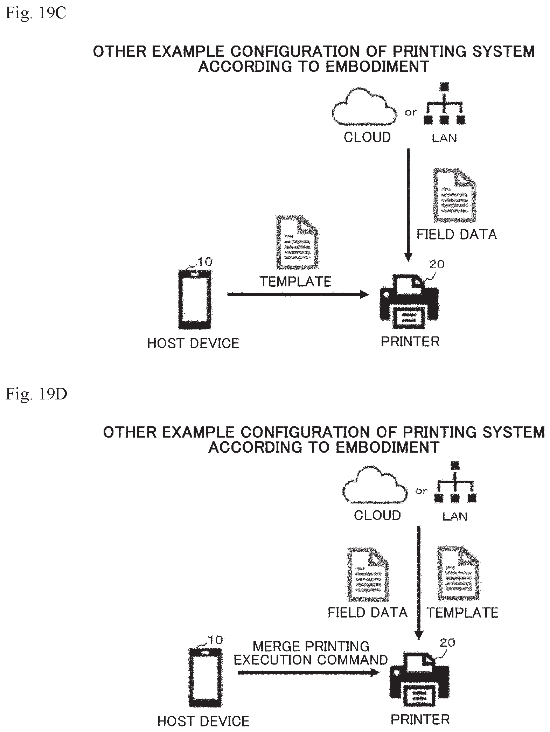

In the system configuration illustrated in Fig. 19C, the host device 10 includes the template storage unit 14, a server includes the field data storage unit 15, and the printer 20 includes the print API generation unit 11 and the print data generation unit 12. The printer 20 executes the processing of the print API generation unit 11 and the print data generation unit 12 by combining the field data transmitted from the server and the template transmitted from the host device 10, and executes printing on the basis of the generated print data.

In the system configuration illustrated in Fig. 19D, the printer 20 includes the print API generation unit 11 and the print data generation unit 12, a server includes the template storage unit 14 and the field data storage unit 15, and the host device 10 only executes the merge printing execution command for the printer 20. In response to the printing execution command, the printer 20 obtains the specified template and field data from the server, executes the processing of the print API generation unit 11 and the print data generation unit 12 with the combination thereof, and executes printing on the basis of the generated print data.

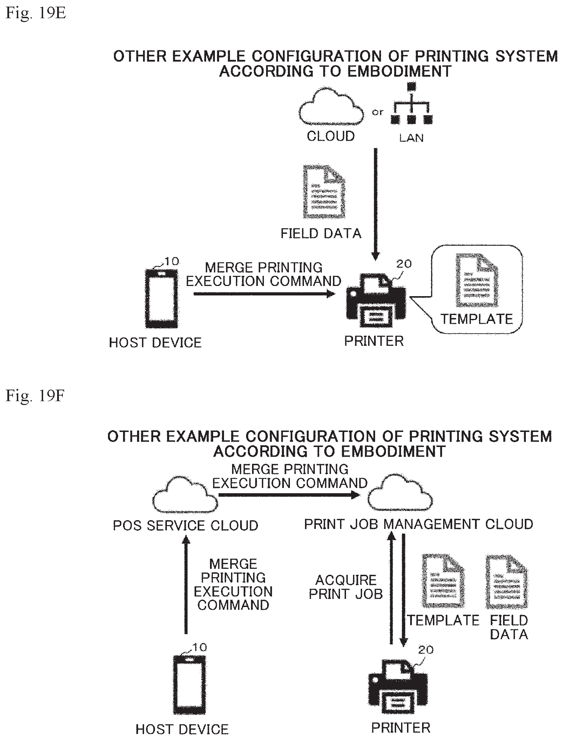

In the system configuration illustrated in Fig. 19E, the printer 20 includes the print API generation unit 11, the print data generation unit 12, and the template storage unit 14, a server includes the field data storage unit 15, and the host device 10 only executes the merge printing execution command for the printer 20. In response to the printing execution command, the printer 20 executes the processing of the print API generation unit 11 and the print data generation unit 12 with a combination of the template held by the printer 20 itself and the field data obtained from the server, and executes printing on the basis of the generated print data.

The system configuration illustrated in Fig. 19F is a variation pattern of the system configuration illustrated in Fig. 19D, and the merge printing execution command from the host device 10 to the printer 20 is made via a cloud server.
In the system configuration illustrated in Fig. 19F, a POS service cloud server and a print job management cloud server are provided in addition to the host device 10 and the printer 20, and the print job management cloud server includes the template storage unit 14 and the field data storage unit 15. The host device 10 executes the merge printing execution command for the printer 20 via the POS service cloud server and the print job management cloud server.
In response to the printing execution command, the printer 20 obtains the specified template and field data from the print job management cloud server, executes the processing of the print API generation unit 11 and the print data generation unit 12 with the combination thereof, and executes printing on the basis of the generated print data. Note that the same configuration can also be applied as a variation pattern of the system configuration illustrated in Fig. 19E.

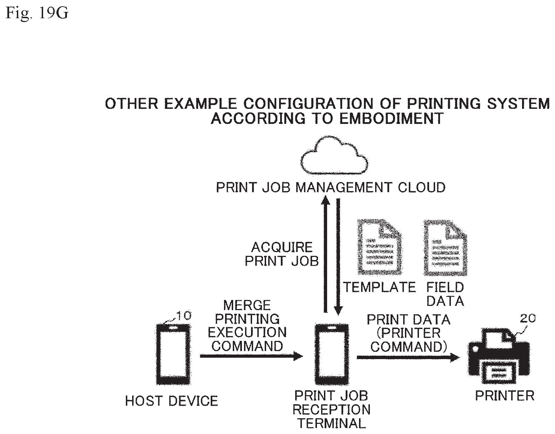

In the system configuration illustrated in Fig. 19G, a print job management cloud server and a print job reception terminal are provided in addition to the host device 10 and the printer 20, the print job reception terminal includes the print API generation unit 11 and the print data generation unit 12, and the print job management cloud server includes the template storage unit 14 and the field data storage unit 15. The host device 10 and the print job reception terminal are connected over a wired/wireless LAN, Bluetooth (registered trademark), Wi-Fi (registered trademark), or the like, for example. The printer 20 and the print job reception terminal are connected over a serial cable, USB, Bluetooth (registered trademark), or the like, for example, and unlike Figs. 19B to 19F, the printer 20 does not need to be connected to the Internet or the like. The host device 10 only executes the merge printing execution command for the print job reception terminal. In response to the printing execution command, the print job reception terminal obtains the specified template and field data from the print job management cloud server, executes the processing of the print API generation unit 11 and the print data generation unit 12 with the combination thereof, and transmits the generated print data to the printer 20 to be printed.

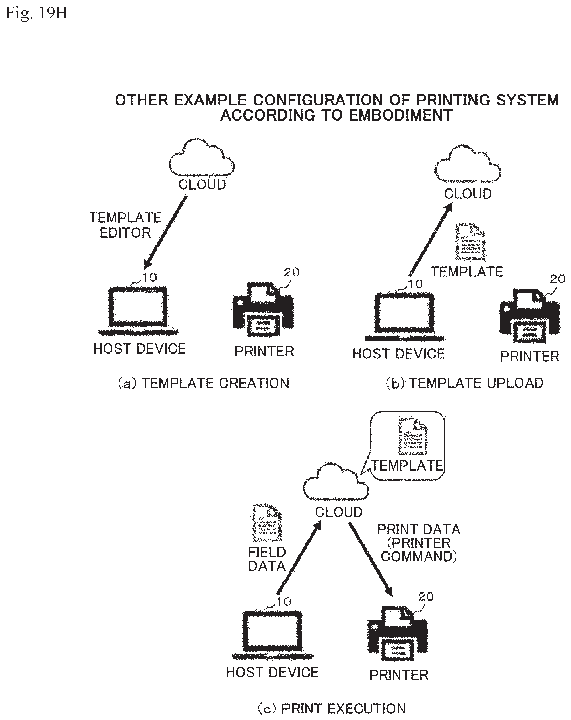

The system configuration illustrated in Fig. 19H includes a template editor on a cloud server, and the cloud server can be accessed from the host device 10 to create templates.
In the system configuration illustrated in Fig. 19H, a template is created in the host device 10 using the template editor on the cloud server (Fig. 19H(a)), and the created template is uploaded from the host device 10 to the cloud server (Fig. 19H(b)). In the system configuration illustrated in Fig. 19H, the host device 10 includes the field data storage unit 15, and the cloud server includes the print API generation unit 11, the print data generation unit 12, and the template storage unit 14. The template storage unit 14 stores the template uploaded from the host device 10. As illustrated in Fig. 19H(c), the host device 10 uploads the field data to the cloud server and makes the merge printing execution command. In response to the printing execution command, the cloud server executes the processing of the print API generation unit 11 and the print data generation unit 12 with a combination of the template held by the cloud server itself and the field data obtained from the host device 10, and transmits the generated print data to the printer 20 to be printed.

Although the system configurations illustrated in Figs. 1 and 19A to 19H are configurations in which one device (the host device 10, the printer 20, the server, or the print job reception terminal) includes both the print API generation unit 11 and the print data generation unit 12, the print API generation unit 11 and the print data generation unit 12 may be provided separately in other devices. For example, as a variation pattern of the system configuration of Fig. 1, the host device 10 may include the print API generation unit 11, the printer 20 may include the print data generation unit 12, the print data generation API (substitute template) generated by the host device 10 may be transmitted to the printer 20, and the printer 20 may generate the print data by executing the print data generation API. This can be applied in the system configurations illustrated in Figs. 19A to 19H in the same manner.

Additionally, in the system configurations illustrated in Figs. 19A to 19H, it is possible to use the template in markup language format or the template in printer command format instead of the template in API call format. Additionally, in the system configurations illustrated in Figs. 19A to 19H, it is possible to use the substitute template in C++ format instead of the substitute template in API call format.

Note that in the first to third embodiments described above, the format of the substituted text strings may be specified in accordance with a substitution rule for the API call commands included in the template. For example, the merge field for the substitution rule that starts with the symbol ${ and ends with the symbol } may be configured as shown below (the symbols "" and + are explanatory and are not actually written), thereby making it possible to specify a representation or a layout of the text string when the field data are inserted into the merge field in accordance with the content of a format specifier.
"${" + "key" + "format specifier" + "}"

The following specifiers, for example, can be used as the format specifier.

### (A) Format specifier for numerical field data

When the field data are a numerical value, the type of text string that the field data will be replaced with can be specified using a format specifier used in the printf function in C language or the like. Several specific examples are given below.

%d: Stringification as a signed decimal integer.

%f: Stringification as a decimal.

%1d: Stringification as a single-digit signed decimal integer.

%5.2f: Stringification as a decimal with a total of five digits, including the decimal point, and two decimal places after the decimal point.

### (B) Format specifier for specifying the number of characters

The number of characters and the presence or absence of abbreviations after the substitution can be specified by a format specifier.

Several specific examples are given below.

%digit=4,last: The number of characters after the substitution is 4. The end of the field data is trimmed.

%digit=10,last,ellipsis: The number of characters after the substitution is 10. The end of the field data is trimmed and an ellipsis (...) is added.

%digit=10,middle,ellipsis: The number of characters after the substitution is 10. The middle of the field data is trimmed and an ellipsis (...) is added.

%digit=10,first,ellipsis: The number of characters after the substitution is 10. The beginning of the field data is trimmed and an ellipsis (...) is added.

Thus, when the field data are a numerical value, for example, the text string obtained when the numerical value is inserted into the merge field of the template can be controlled. For example, when the field data are pi 3.14159265359, it is possible to specify whether the value will be printed on the template as "3", "3.14", or "3.14159265359". Furthermore, when the width of the printing sheet is narrow such that there is a limit on the number of characters that fit on one line, it is possible, by means of template specification, to avoid an unintended line break where the text string of the field data is too long to fit on one line and the printed text extends onto the next line.

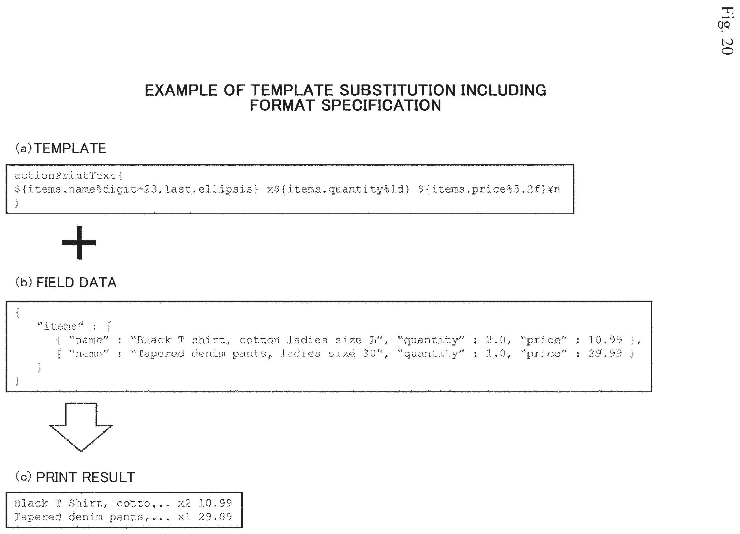

A specific example will be described below. Here, an example in which the printing sheet is a receipt and a text string including a list of items is printed will be described. The number of characters that can be printed on one line of the receipt is 32, making it necessary to keep the number of characters of one line of the print data to within 32 characters. In this case, a template that has been subjected to format specification, as illustrated in Fig. 20(a), for example, is prepared.

On the template illustrated in Fig. 20(a), the part "${items.name%digit=23,last,ellipsis}" specifies that the product name is to be 23 characters long, and if the product name does not fit, the end is to be truncated and "..." is to be added. At this point, 23/32 characters are printed on one line. The next part "x" is a fixed text string disposed before a quantity substitution rule. At this point, 25/32 characters are printed on one line. The next part "${items.quantity%1d}" specifies that the numerical value of the quantity is to be stringified as a single-digit decimal integer. At this point, 26/32 characters are printed on one line. The next part "" is a fixed text string disposed before a unit price substitution rule. At this point, 27/32 characters are printed on one line. The next part "${items.price%5.2f}\n" specifies that the numerical value of the unit price is to be stringified as a decimal with a total of five digits, including the decimal point, and two decimal places after the decimal point. At this point, 32/32 characters are printed on one line. Finally, a line break is performed in accordance with "\n".

When the template of Fig. 20(a) is used in combination with the field data of Fig. 20(b), the print result of Fig. 20(c) is obtained. Thus, by using the substitution rules of the template to specify the number of characters, the layout of the text string on one line can be specified flexibly. Moreover, the numerical values of the field data can be stringified in a format corresponding to a receipt layout.

In addition, all of the embodiments described above merely illustrate specific examples of implementation of the present invention, and the technical scope of the present invention is not to be interpreted as being limited thereby.
In other words, the present invention can be implemented in various forms without deviating from the spirit or the main features thereof.

### [Reference Signs List]

- 10: Host device
- 11: Print API generation unit (print data generation data generation unit)
- 12: Print data generation unit
- 13: Field data generation unit
- 14: Template storage unit
- 15: Field data storage unit
- 20: Printer

## Claims

1. A print data generation device that generates print data including a plurality of print-related commands using a template and field data including data of print elements to be inserted into merge fields of the template,
wherein the template includes one or more generation commands for generating the print-related commands, and the one or more generation commands are constituted by commands of a smallest unit not including repetitions, the number of repetitions corresponding to the number of print elements, and the number of print elements being variable, and
print data including print-related commands into which the data of the print elements have been inserted are generated using a plurality of the generation commands including substituted generation commands by specifying a range of generation commands for repeatedly executing processing a number of times corresponding to the variable number of print elements from the template on the basis of the content of both the template and the field data or the content of the template, and substituting merge fields included in the generation commands with the data of the print elements, including repeat substitutions within the specified range.

2. The print data generation device according to claim 1, comprising:
a print data generation data generation unit that generates data for print data generation including the plurality of generation commands having a structure in a same format as the template by substituting the merge fields included in the generation commands with the data of the print elements, including repeat substitutions within the specified range; and
a print data generation unit that generates the print data using the data for print data generation generated by the print data generation data generation unit.

3. The print data generation device according to claim 1, comprising:
a print data generation data generation unit that generates data for print data generation including the plurality of generation commands having a structure in a different format from the template by substituting the merge fields included in the generation commands with the data of the print elements, including repeat substitutions within the specified range; and
a print data generation unit that generates the print data using the data for print data generation generated by the print data generation data generation unit.

4. The print data generation device according to claim 1,
wherein the print data is generated by successively generating the plurality of generation commands including the substituted generation commands by substituting the merge fields included in the generation commands with the data of the print elements, including repeat substitutions within the specified range, and sequentially generating the print-related commands from the generation commands each time one of the plurality of generation commands is generated.

5. The print data generation device according to any one of claims 1 to 4,
wherein the template is a template in a format including API call commands for calling and
executing APIs describing processing for generating the print-related commands as the generation commands.

6. The print data generation device according to any one of claims 1 to 4,
wherein the template is a template in a format in which instructions for generating the print-related commands are written in a markup language as the generation commands.

7. The print data generation device according to any one of claims 1 to 4,
wherein the template is a template in a format in which instructions for generating the print-related commands are written in printer commands as the generation commands.

8. A print data generation method for generating print data including a plurality of print-related commands using a template and field data including data of print elements to be inserted into merge fields of the template,
wherein the template includes one or more generation commands for generating the print-related commands, and the one or more generation commands are constituted by commands of a smallest unit not including repetitions, the number of repetitions corresponding to the number of print elements, and the number of print elements being variable, and
a control unit of a print data generation device generates print data including print-related commands into which the data of the print elements have been inserted using a plurality of the generation commands including substituted generation commands by specifying a range of generation commands for repeatedly executing processing a number of times corresponding to the variable number of print elements from the template on the basis of the content of both the template and the field data or the content of the template, and substituting merge fields included in the generation commands with the data of the print elements, including repeat substitutions within the specified range.

9. A data generation device for print data generation that generates data for print data generation including a plurality of generation commands using a template and field data including data of print elements to be inserted into merge fields of the template,
wherein the template includes one or more generation commands for generating print-related commands included in print data, the one or more generation commands being constituted by commands of a smallest unit not including repetitions, the number of repetitions corresponding to the number of print elements, and the number of print elements being variable, and
the data generation device comprising a print data generation data generation unit for generating the data for print data generation including the plurality of generation commands by specifying a range of generation commands for repeatedly executing processing a number of times corresponding to the variable number of print elements from the template on the basis of the content of both the template and the field data or the content of the template, and substituting merge fields included in the generation commands with the data of the print elements, including repeat substitutions within the specified range.

10. A data generation method for print data generation that generates data for print data generation including a plurality of generation commands using a template and field data including data of print elements to be inserted into merge fields of the template,
wherein the template includes one or more generation commands for generating print-related commands included in print data, the one or more generation commands being constituted by commands of a smallest unit not including repetitions, the number of repetitions corresponding to the number of print elements, and the number of print elements being variable, and
a print data generation data generation unit of a data generation device for print data generation generates the data for print data generation including the plurality of generation commands by specifying a range of generation commands for repeatedly executing processing a number of times corresponding to the variable number of print elements from the template on the basis of the content of both the template and the field data or the content of the template, and
substituting merge fields included in the generation commands with the data of the print elements, including repeat substitutions within the specified range.
